# EUROPEAN PATENT SPECIFICATION

(11) **EP 3 041 160 B1**
(45) Date of publication and mention of the grant of the patent: **27.12.2017**
(21) Application number: 13896805.2
(22) Date of filing: 30.10.2013
(51) Int. Cl.: H04L 1/18, H04L 29/08, H04W 40/36, H04W 36/08, H04L 1/00, H04W 36/00

(54) **HYBRID AUTOMATIC REPEAT REQUEST DATA DECODING METHOD, NODE DEVICE, AND DECODING SYSTEM**
DATENDECODIERUNGSVERFAHREN FÜR EINE HYBRIDE AUTOMATISCHE WIEDERHOLUNGSANFRAGE, KNOTENVORRICHTUNG UND DECODIERUNGSSYSTEM
PROCÉDÉ DE DÉCODAGE DE DONNÉES DE DEMANDE DE RÉPÉTITION AUTOMATIQUE HYBRIDE, DISPOSITIF DE NOEUD ET SYSTÈME DE DÉCODAGE

(43) Date of publication of application: 06.07.2016
(73) Proprietor: Huawei Technologies Co., Ltd., Longgang District Shenzhen, Guangdong 518129 (CN)
(72) Inventor: ZHANG, Jinfang, Shenzhen Guangdong 518129 (CN); LI, Bojie, Shenzhen Guangdong 518129 (CN)
(74) Representative: Epping - Hermann - Fischer
(86) International application number: PCT/CN2013/086235
(87) International publication number: WO 2015/061988

(56) References cited:
- WO-A1-2012/094928
- CN-A- 1 758 579
- CN-A- 101 615 988
- CN-A- 101 997 662
- US-A1- 2011 075 611
- US-A1- 2011 194 518
- US-A1- 2012 039 260
- US-A1- 2012 176 887
- US-A1- 2013 017 852

## Description

### FIELD

The present disclosure relates to the technical field of communication, and in particular to a method for decoding data based on hybrid automatic repeat request, a node device and a decoding system.

### BACKGROUND

Recently, a wireless access network system based on the cloud computing technology, a C-RAN (Cloud-radio access network, Cloud-radio access network) architecture, is being concerned by the industry. In this architecture, in view of balance computing resource brought by the cloud access network architecture, a computing architecture may be generally divided into multiple layers to solve a tidal effect. For example, the computing architecture may be divided into a local computing center and a centralized computing center. In this case, the computing resource can be scheduled between an upper layer of computing center and a lower layer of computing center. A portion of user data, for example baseband data even data in an L2 layer, that is, a data link layer, is processed in the local computing center, and thereby extremely reducing a ratio of data to be transmitted to the centralized computing center and saving a bandwidth.

In one uplink HARQ (Hybrid Automatic Repeat Request, Hybrid Automatic Repeat Request) process according to the conventional technology, a decoding node device for uplink user data is generally unchanged. Therefore, the uplink user data may be decoded unsuccessfully in a case that the network state around the node is changed, for example, a network transmission capability between the node device and a back end backbone network is insufficient, or a computing capability of the node device is insufficient.

Document US2012/176887A1 discloses method and system for hybrid automatic repeat request operation for uplink coordinated multi-point signaling, the method in one embodiment sending a data packet from a user equipment to a plurality of network elements; waiting for a control indication from at least one of the plurality of network element; and retransmitting the data packet to the plurality of network elements if the control indication specifies retransmission is required.

### SUMMARY

In view of the above, a technical problem to be addressed by embodiments of the present disclosure is: how to decode uplink user data which is decoded unsuccessfully in a node device, when a decoding node device is switched to another node device.

In order to address the above technical problem, in a first aspect, according to the embodiments of the present disclosure, a method for decoding data based on Hybrid Automatic Repeat Request HARQ is provided, which includes:
decoding, by a first node device, uplink user data;
indicating, by the first node device based on a network state and computing capabilities of respective node devices, to switch a decoding node device for the uplink user data to a second node device; and
sending, by the first node device, HARQ process information, user identification information and data decoded unsuccessfully to the second node device, such that the second node device combines and decodes uplink user data retransmitted by a user.

In conjunction with the first aspect, in a possible implementation, the first node device may be a centralized computing center and the second node device may be a local computing center.

In order to address the above technical problem, in a second aspect, according to the embodiments of the present disclosure, a method for decoding data based on Hybrid Automatic Repeat Request HARQ is provided, which includes:
decoding, by a first node device, uplink user data;
indicating, by a second node device based on a network state and computing capabilities of respective node devices, to switch a decoding node device for the uplink user data to the second node device; and
sending, by the first node device, HARQ process information, user identification information and data decoded unsuccessfully to the second node device, such that the second node device combines and decodes uplink user data retransmitted by a user.

In conjunction with the second aspect, in a possible implementation, the first node device may be a local computing center and the second node device may be a centralized computing center.

In conjunction with the first and second aspects, in a possible implementation, the method for decoding data based on HARQ may further include:
sending, by the first node device, transmission format information to the second node device, such that the second node device combines and decodes the uplink user data retransmitted by the user.

In order to address the above technical problem, in a third aspect, according to embodiments of the present disclosure, a node device is provided, which includes:
a first decoding unit configured to decode uplink user data;
a first sending unit connected to the first decoding unit and configured to send HARQ process information, user identification information and data decoded unsuccessfully to the second node device, such that the second node device combines and decodes uplink user data retransmitted by a user; and
an indication unit connected to the first decoding unit and configured to indicate, based on a network state and computing capabilities of respective node devices, to switch a decoding node device for the uplink user data to the second node device.

In conjunction with the third aspect, in a possible implementation, the node device may be a centralized computing center and the second node device may be a local computing center.

In conjunction with the third aspect, in a possible implementation, the first sending unit may be further configured to send transmission format information to the second node device, such that the second node device combines and decodes the uplink user data retransmitted by the user.

In order to address the above technical problem, in a fourth aspect, according to embodiments of the present disclosure, a node device is provided, which includes:
a first receiving unit configured to receive HARQ process information, user identification information and data decoded unsuccessfully sent by a first node device;
a second decoding unit connected to the first receiving unit and configured to combine and decode uplink user data retransmitted by a user based on the HARQ process information, the user identification information and the data decoded unsuccessfully; and
a second receiving unit connected to the second decoding unit and configured to receive an indication of the first node device based on a network state and computing capabilities of respective node devices, to switch a decoding node device for the uplink user data to the node device.

In conjunction with the fourth aspect, in a possible implementation, the node device may be a local computing center and the first node device may be a centralized computing center.

In conjunction with the fourth aspect, in a possible implementation, the first receiving unit may be further configured to receive transmission format information sent by the first node
device, and the second decoding unit may be configured to combine and decode the uplink user data retransmitted by the user based on the HARQ process information, the user identification information, the data decoded unsuccessfully and the transmission format information.

In order to address the above technical problem, in a fifth aspect, according to embodiments of the present disclosure, a decoding system is provided, which includes a first node device and a second node device, where the first node device includes the node device according to any one of the third aspect and all the possible implementations of the third aspect, and the second node device includes the node device according to any one of the fourth aspect and all the possible implementations of the fourth aspect.

With the method for decoding data based on HARQ, the node device and the decoding system according to the embodiments of the present disclosure, the decoding node device can be switched based on a network state around the decoding node device and computing capabilities of the respective node devices; then the HARQ process information, the user identification information and the data decoded unsuccessfully stored in the node device which is switched from are sent to the node device which is switched to, such that the node device which is switched to can combine and decode the uplink user data retransmitted by the user. With the method for decoding data based on HARQ and the node device according to the embodiments of the present disclosure, the retransmitted uplink user data is combined and decoded by effectively using the HARQ process information, the user identification information and the data decoded unsuccessfully before the switching, thereby improving a success rate of decoding. Moreover, by switching the decoding node device, a transmission efficiency of the uplink user data can be improved, the computing capabilities of the respective node devices are fully used and the network traffic is balanced.

Hereinafter exemplary embodiments are described in detail in conjunction with the drawings, so that other features and aspects of the present disclosure become clear.

### BRIEF DESCRIPTION OF THE DRAWINGS

The drawings contained in the specification as a part of the specification, together with the specification, show the exemplary embodiments, features and aspects of the present disclosure, and are used to explain the principle of the present disclosure.
Figure 1 shows a system architecture of a C-RAN according to the conventional technology;
Figure 2 shows a flowchart of a method for decoding data based on HARQ according to an embodiment of the present disclosure;
Figure 3 shows a flowchart of a method for decoding data based on HARQ according to another embodiment of the present disclosure;
Figure 4 shows a flowchart of a method for decoding data based on HARQ according to still another embodiment of the present disclosure;
Figure 5 shows a schematic diagram showing that uplink user data, which is switched from a first node device to a second node device, is combined and decoded;
Figure 6 is a structural block diagram of a node device according to an embodiment of the present disclosure;
Figure 7 is a structural block diagram of a node device according to another embodiment of the present disclosure;
Figure 8 is a structural block diagram of a decoding system according to an embodiment of the present disclosure; and
Figure 9 is a structural block diagram of a node device according to still another embodiment of the present disclosure.

### DETAILED DESCRIPTION OF THE EMBODIMENTS

Hereinafter exemplary embodiments, features and aspects of the present disclosure are described in detail in conjunction with the drawings. The same reference numbers shown in the drawings represent the same or similar elements. The drawings show various aspects of the embodiments, however, the drawings are unnecessary to be drawn to scale unless specially indicated.

The term "exemplary" is used exclusively herein to mean "serving as an example, an embodiment, or illustration". Any "exemplary" embodiment described herein is not necessarily to be construed as advantageous over or superior to other embodiments.

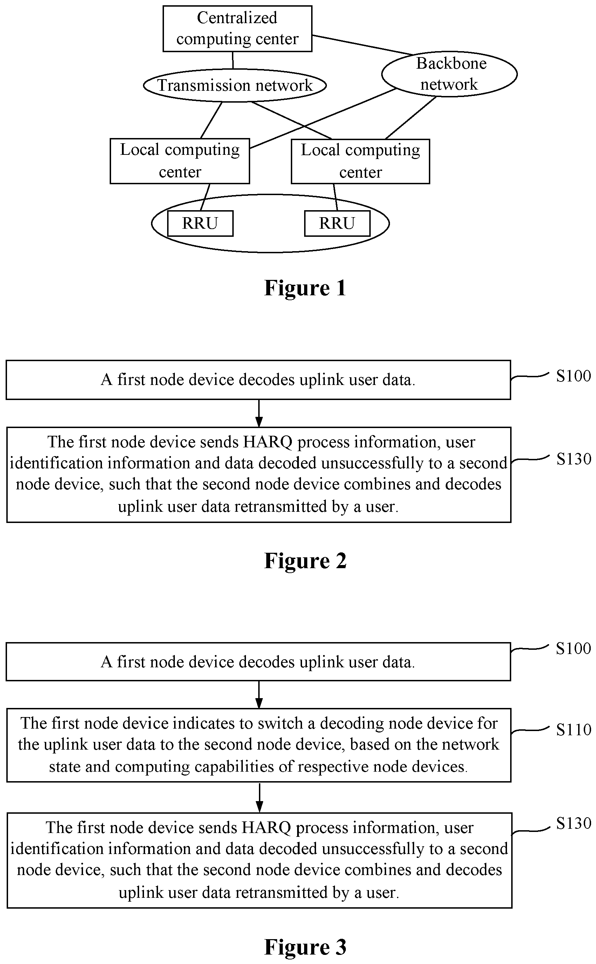

Moreover, many specific details are provided in embodiments in the following to describe the present disclosure better. The scope of the invention is defined in the appended claims. As described in the background and the summary, a C-RAN system architecture is generally divided into multiple layers. For example, as shown in Figure 1, the C-RAN system architecture is divided into two layers: a local computing center and a centralized computing center, each of which may be referred to as a node device herein. The system architecture may be divided into the centralized computing center and the local computing center in multiple ways based on functions. For example, in an uplink direction of a user data transmission, a second node device receives IQ (In-phase and Quadrature, In-phase and Quadrature) data transmitted from an RRU (Remote Radio Unit, Remote Radio Unit), and obtains uplink user data to be decoded after completing functions such as removing CP (Cyclic Prefix, Cyclic Prefix), FFT (Fast Fourier transform, Fast Fourier transform), resource block reverse mapping and demodulation. The local computing center determines whether the uplink user data needs to be transmitted using a CoMP (Coordinated Multi-point, Coordinated Multi-point) transmission based on received indication information sent from the centralized computing center. The indication information indicates the local computing center to: upload uplink user data which needs to be transmitted using the CoMP transmission, i.e. CoMP user data, to the centralized computing center via a transmission network for a joint decoding, perform a link layer processing and a high layer signaling processing on the uplink user data, and transmit the processed uplink user data to a backbone network through a standard interface such as an S1 interface of an LTE (Long Term Evolution, Long Term Evolution) system. The local computing center decodes uplink user data, which does not need to be transmitted using the CoMP transmission, i.e. uplink non-CoMP user data, in the local computing center with a priority, perform the link layer processing and the high layer signaling processing on the uplink non-CoMP user data, and transmit the processed uplink user data to a back end backbone network through a standard interface. In addition, the uplink direction may further involve functions such as a channel separation, a channel estimation and a channel measurement.

In the conventional technology, the centralized computing center may generally decode the uplink CoMP user data and the uplink non-CoMP user data, while the local computing center may generally decode the uplink non-CoMP user data. Each of the uplink CoMP user data and the uplink non-CoMP user data is generally decoded in only one decoding node device (whether it is decoded successfully or not), and then transmitted to the back end backbone network. That is to say, the decoding node device is not changed in one HARQ process. In this case, the receiving side of the uplink user data can not know correct user data, if the uplink user data is decoded unsuccessfully. Therefore, a method for decoding data based on HARQ and a corresponding node device are provided by the present disclosure, including: dynamically switching the decoding node device; and combining and decoding the uplink user data retransmitted by the user after the decoding node device is switched. A specific process may be referred to the following embodiments.

### First embodiment

Figure 2 shows a flowchart of a method for decoding data based on HARQ according to an embodiment of the present disclosure. As shown in Figure 2, the method may mainly include the following steps.

In step S100, uplink user data is decoded by a first node device.

In step S130, HARQ process information, user identification information and data decoded unsuccessfully are sent to a second node device by the first node device, such that the second node device combines and decodes uplink user data retransmitted by a user.

In the embodiment, the first node device is a node device where the uplink user data is decoded for a first time, and the second node device is a node device where the uplink user data retransmitted by the user is decoded after the decoding node device is switched. The first node device and the second node device each may be one of a centralized computing center and a local computing center. If the first node device is the centralized computing center, the second node device is the local computing center. Alternatively, if the first node device is the local computing center, the second node device is the centralized computing center.

In the above step S100, the received uplink user data is decoded by the first node device firstly. For example, the first node device is the centralized computing center, then the uplink user data may be obtained in the following way: firstly some baseband processing are performed on data received from an RRU by the local computing center, including functions such as removing CP, FFT, resource block reverse mapping and demodulation, and uplink user data to be decoded may be obtained after the demodulation. The local computing center determines which of the uplink user data needs to be transmitted using a CoMP transmission, that is, uplink CoMP user data, and which of the uplink user data does not need to be transmitted using the CoMP transmission, that is, uplink non-CoMP user data, based on indication information sent by the centralized computing center. Then the second node device uploads the uplink CoMP user data to the centralized computing center for a joint decoding and decodes the uplink non-CoMP user data locally with a priority; or the second node device may upload a portion of the uplink non-CoMP data to the first node device for decoding.

In the above step S130, in one uplink HARQ process, the uplink user data may be decoded unsuccessfully due to the change in the network state around the decoding node device and computing capabilities of the respective node devices. In this case, the decoding node device may be switched. For example, the first node device is the centralized computing center, and in one uplink HARQ process, the uplink user data is decoded in the centralized computing center firstly. The decoding node device may be switched to the local computing center if the transmission capability between the centralized computing center and a back end backbone network is insufficient or the computing capability of the centralized computing center is insufficient, while the transmission capability between the local computing center and the back end backbone network is sufficient and the computing capability is sufficient. After the decoding node device is switched, the uplink user data may be retransmitted. However, firstly, the HARQ process information of the HARQ process, the user identification information, the data decoded unsuccessfully and so on also need to be sent to the decoding node device which is switched to, such that the local computing center combines and decodes the received uplink user data retransmitted by the user and the data decoded unsuccessfully. For example, the first node device is the centralized computing center, and firstly, the HARQ process information, the user identification information, the data decoded unsuccessfully and so on are stored in the centralized computing center. After the decoding node device is switched, the centralized computing center may send the HARQ process information, the user identification information, the data decoded unsuccessfully and so on stored in the centralized computing center to the local computing center. The above HARQ process information and the user identification information are used to identify the received data decoded unsuccessfully, such that the local computing center can find matched data which is decoded unsuccessfully based on the user identification information and the HARQ process information of the uplink user data retransmitted by the user, and finally the local computing center combines and decodes the uplink user data retransmitted by the user and the data decoded unsuccessfully which matches the uplink user data.

In one HARQ process according to the conventional technology, uplink user data is decoded in only one node device, and then the decoded uplink user data is uploaded to the back end backbone network. However, the uplink user data may be decoded unsuccessfully due to the change in the network state around the decoding node device and the computing capabilities of the respective node devices. In this case, according to the embodiment of the present disclosure, the decoding node device may be switched based on the network state around the decoding node device and the computing capabilities of the respective node devices. And the HARQ process information, the user identification information, the data decoded unsuccessfully and so on stored in a node which is switched from are sent to a node device which is switched to, such that the node device which is switched to can combine and decode the uplink user data retransmitted by the user. With the method for decoding data based on HARQ according to the embodiment of the present disclosure, the retransmitted uplink user data is combined and decoded by effectively using the HARQ process information, the user identification information, the data decoded unsuccessfully and so on obtained before the switching, thereby improving the success rate of decoding. Moreover, by switching the decoding node device, a transmission efficiency of the uplink user data can be improved, the computing capabilities of the respective node devices are fully used and the network traffic is balanced.

### Second embodiment

Figure 3 shows a flowchart of a method for decoding data based on HARQ according to another embodiment of the present disclosure. Steps in Figure 3 and steps in Figure 2 having the same reference signs have the same functions, and descriptions for these steps are omitted for simplification.

As shown in Figure 3, the method for decoding data based on HARQ according to the embodiment differs from the method for decoding data based on HARQ according to the first embodiment mainly in that: in a possible implementation, in a case that the first node device is a centralized computing center and the second node device is a local computing center, the method further includes the following step after step S100.

In step S110, the first node device indicates to switch the decoding node device for the uplink user data to the second node device, based on the network state and computing capabilities of respective node devices.

Specifically, in one HARQ process, firstly the uplink user data including uplink CoMP user data and uplink non-CoMP user data is decoded in the first node device, i.e. the centralized computing center. During decoding the uplink user data, the centralized computing center may detect the change in the state of a surrounding network and the change in the computing capabilities of the respective node devices. The centralized computing center may switch the decoding node device for the uplink user data to the second node device, i.e., the local computing center, based on the network state and the computing capabilities of the respective node devices, in a case that the state of the surrounding network is changed or the computing capability of the centralized computing center is insufficient.

In a possible implementation, the centralized computing center may indicate to switch a portion of the uplink non-CoMP user data to the local computing center for combining and decoding, in a case that the centralized computing center detects that the network state and the computing capabilities of the respective node devices meet any one of conditions 1 to 5.

Condition 1: the computing capability of the centralized computing center is insufficient while the computing capability of the local computing center is sufficient, and the network transmission capability between the local computing center and the back end backbone network is sufficient.

Condition 2: the network transmission capability between the centralized computing center and the back end backbone network is insufficient while the computing capability of the local computing center is sufficient, and the network transmission capability between the local computing center and the back end backbone network is sufficient.

Condition 3: the computing capability of the centralized computing center is insufficient while the computing capability of the local computing center is sufficient, and the network transmission capability between the centralized computing center and the local computing center and the network transmission capability between the local computing center and the back end backbone network are sufficient.

Condition 4: the network transmission capability between the centralized computing center and the back end backbone network is insufficient while the computing capability of the local computing center is sufficient, and the network transmission capability between the centralized computing center and the local computing center and the network transmission capability between the local computing center and the back end backbone network are sufficient.

Condition 5: the network transmission capability between the centralized computing center and the local computing center is insufficient while the computing capability of the local computing center is sufficient, and the network transmission capability between the local computing center and the back end backbone network is sufficient.

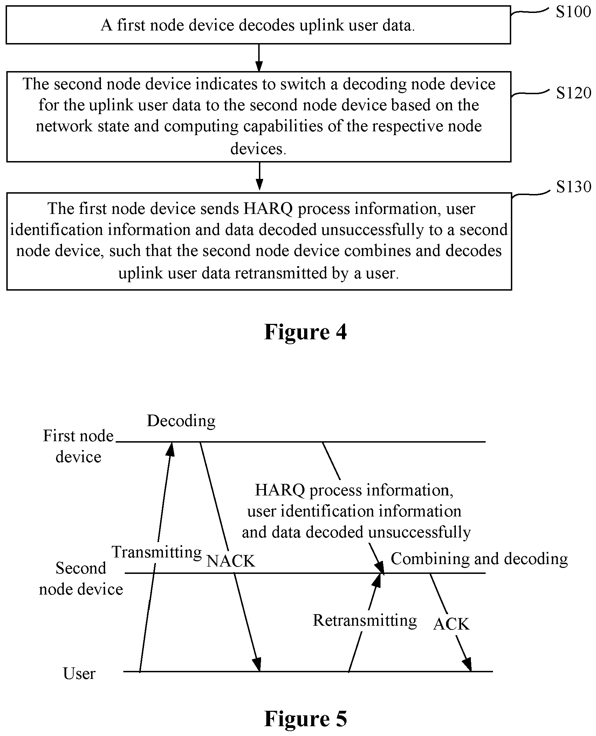

Figure 4 is a flowchart of a method for decoding data based on HARQ according to an embodiment of the present disclosure. Steps in Figure 4 and steps in Figure 2 and Figure 3 having the same reference signs have the same functions, and descriptions for these steps are omitted for simplification.

As shown in Figure 4, in a possible implementation, if the first node device is a local computing center and the second node device is a centralized computing center, the method further includes the following step after step S100.

In step S120, the second node device indicates to switch a decoding node device for the uplink user data to the second node device based on the network state and computing capabilities of the respective node devices.

Specifically, in one HARQ process, uplink non-CoMP user data is firstly decoded in the local computing. During decoding the uplink non-CoMP user data, the centralized computing center may detect the change in a state of a surrounding network and the change in the computing capabilities of the respective node devices. The centralized computing center may switch the decoding node device for the uplink non-CoMP user data to the centralized computing center based on the network state and the computing capabilities of the respective node devices, in a case that the state of the surrounding network is changed and its computing capability is insufficient.

Condition 6: uplink non-CoMP user data to be decoded in the local computing center needs to be transmitted using a CoMP transmission, the computing capability of the centralized computing center is sufficient, the network transmission capability between the centralized computing center and the local computing center is sufficient and the network transmission capability between the centralized computing center and the back end backbone network is sufficient.

Condition 7: the computing capability of the local computing center is insufficient while the computing capability of the centralized computing center is sufficient, the network transmission capability between the centralized computing center and the local computing center is sufficient and the network transmission capability between the centralized computing center and the back end backbone network is sufficient.

Condition 8, the network transmission capability between the local computing center and the back end backbone network is insufficient while the computing capability of the centralized computing center is sufficient, the network transmission capability between the centralized computing center and the local computing center is sufficient and the network transmission capability between the centralized computing center and the back end backbone network is sufficient.

The computing capability is determined by comparing the processing duration, in which the user data is processed by the centralized computing center or the local computing center, with a predetermined threshold. For example, a threshold t may be set; if the processing duration s is not less than the threshold t, it is indicated that the computing capability is insufficient; otherwise, it is indicated that the computing capability is sufficient. Alternatively, two thresholds may be set, t1 and t2, where t1>t2. If the processing duration s is not less than t1, it is indicated that the computing capability is insufficient; if the processing duration s is not larger than t2, it is indicated that the computing capability is sufficient. The network transmission capability is determined by comparing a bandwidth usage rate with a predetermined bandwidth usage rate threshold. If the bandwidth usage rate is not less than the predetermined bandwidth usage rate threshold, it is indicated that the network transmission capability is insufficient; otherwise, it is indicated that the network transmission capability is sufficient. The bandwidth usage rate may be obtained from a ratio of user data traffic and the provided transmission bandwidth.

It should be noted that, since the uplink non-CoMP user data needs to be transmitted using CoMP transmission in the condition 6, it is indicated to switch the uplink non-CoMP user data from the local computing center to the centralized computing center for a joint decoding.

The decoding node device is switched according to any one of the above conditions. Since HARQ process information, user identification information, data decoded unsuccessfully and so on of user data are stored in the first node device before the decoding node device is switched, the success rate of decoding may be reduced greatly in a case that the HARQ process information, the user identification information, the data decoded unsuccessfully and so on, as well as the corresponding process information are not forwarded to the first node device for combining and decoding. Therefore, in a case that the node is switched, user identification information, HARQ process information, data decoded unsuccessfully and so on, which are not finished, need to be forwarded to the decoding node device which is switched to. The data decoded unsuccessfully is soft bit data decoded and output in the LTE, for example. Figure 5 shows a switching process from the first node device to the second node device. As shown in Figure 5, at the beginning, uplink user data is decoded in the first node device. An indication for switching to the second node device is received before one HARQ process ends. Then the first node device sends an NACK message to a user, and the user retransmits the uplink user data to the second node device during retransmission after receiving the message. Moreover, the first node device sends user identification information, HARQ process information, the data decoded unsuccessfully and so on to the second node device. The second node device may combine and decode the uplink user data retransmitted by the user after receiving the user identification information, the HARQ process information, the data decoded unsuccessfully and so on sent by the first node device. The second node device sends an ACK message, representing that the uplink user data is successfully decoded, to the user after successfully decoding the uplink user data.

In a possible implementation, according to the method for decoding data based on HARQ in the embodiment, it may be further determined whether the first node device sends transmission format information to the second node device depending on whether the HARQ transmission of the uplink user data is adaptive or non-adaptive. If the HARQ transmission of the uplink user data is adaptive and since the transmission format of each transmission may change, transmission format information may be sent, together with data to be retransmitted, for demodulation and decoding. In this case, it is unnecessary to forward the transmission format information. If the HARQ transmission of the uplink user data is non-adaptive, the sending end uses a transmission format being the same as that used in the last time. In order to save signaling, the information is not sent together with the data to be retransmitted. Information for demodulation and decoding does not exist in the decoding node device which is switched to. In this case, information such as an allocating mode of resource blocks, a modulating mode, a length of a transmission block and a transmission duration needs to be forwarded, such that the node which is switched to recognizes user data and performs demodulating and decoding correctly.

Therefore, information forwarded from the first node device to the second node device may include user identification information, process information and data decoded unsuccessfully, and may further include transmission format information.

In a possible implementation, since the amount of data decoded unsuccessfully is much larger than that of HARQ state information and transmission format information, it is difficult to transmit the data decoded unsuccessfully from a node device which is switched from to a node device which is switched to in a timely manner due to the limitation of the network transmission capability between the first node device and the second node device. In a case that the centralized computing center detects that the user data decoded unsuccessfully can not be transmitted to the node device which is switched to since the network transmission capability between the first node device and the second node device is insufficient, the centralized computing center delays the switching until the HARQ process ends.

In a possible implementation, if the above switching of the node device can not be delayed due to a performance effect, the centralized computing center may send different indications for different types of HARQ processes. For an HARQ-I self-decoding type process and an HARQ-III self-decoding type process, the HARQ process may continue since retransmitted data can be decoded by itself. And the sending end of the uplink user data is informed of retransmitting for zero time, hence a permitted maximal number of retransmissions is not influenced. For an HARQ-II redundancy incremental type process, since retransmitted data generally can be decoded only after being combined with data transmitted previously, the centralized computing center indicates the sending end of the uplink user data to finish the HARQ process and reselect an idle process to transmit the uplink user data corresponding to the finished process in a case that it is impossible to obtain the transmitted data.

Moreover, according to actual needs, the first node device may delay the above switching of the node devices, or finish the HARQ process and reselect an idle process to transmit the uplink user data corresponding to the finished process, and thereby improving the feasibility in decoding the uplink user data according to the present disclosure.

It should be noted that, the application scenarios described in the present disclosure are based on two layers of computing centers of the C-RAN system architecture. It should be noted by those skilled in the art that, the present disclosure is also adapted to a scenario of more than two layers of computing centers existing in an actual arrangement. In addition to the C-RAN scenario, the present disclosure may further be adapted to the scenario of a distributed base station architecture having a master base station and a slave base station, such as a HetNet (Heterogeneous Network, Heterogeneous Network), and in this case the centralized computing center may be the master base station or a macro base station of the distributed base stations.

In one HARQ process according to the conventional technology, the uplink user data is decoded in only one node device, and then the decoded uplink user data is uploaded to a back end backbone network. However, the uplink user data may be decoded unsuccessfully due to the change in the network state around the decoding node device and computing capabilities of the respective node devices. In this case, according to the embodiment of the present disclosure, the decoding node device may be switched based on the network state around the decoding node device and the computing capabilities of the respective node devices. And then HARQ process information, user identification information, data decoded unsuccessfully and so on stored in a node device which is switched from are sent to a node device which is switched to, such that the node device which is switched to can combine and decode uplink user data retransmitted by the user. With the method for decoding data based on HARQ according to the embodiment of the present disclosure, the retransmitted uplink user data is combined and decoded by effectively using the HARQ process information, the user identification information, the data decoded unsuccessfully and so on obtained before the switching, and thereby improving the success rate of the decoding. Moreover, by switching the decoding node device, a transmission efficiency of the uplink user data can be improved, the computing capabilities of the respective node devices are fully used and the network traffic can be balanced. Finally, according to actual needs, the above switching of node device may be delayed or the HARQ process may be finished and an idle process may be reselected to transmit uplink user data corresponding to the finished process, and thereby improving the feasibility in decoding the uplink user data according to the present disclosure.

### Third embodiment

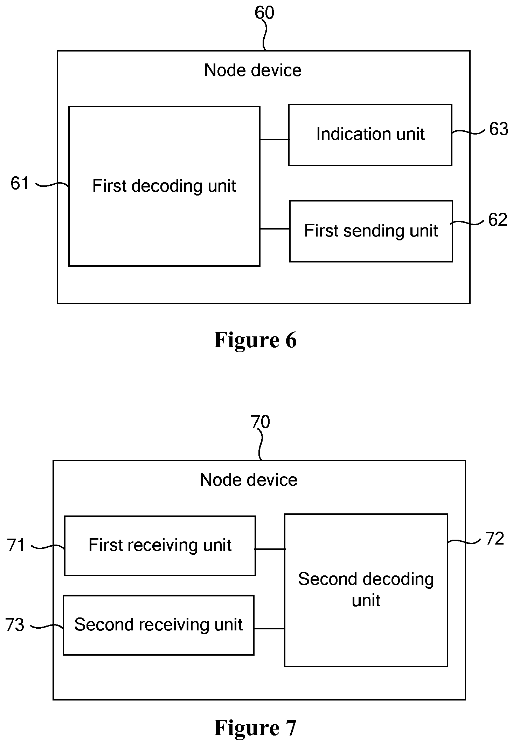

Figure 6 shows a structural block diagram of a node device according to an embodiment of the present disclosure. As shown in Figure 6, a node device 60 may mainly include a first decoding unit 61 and a first sending unit 62. The first decoding unit 61 is mainly configured to decode uplink user data. And the first sending unit 62 is connected to the first decoding unit 61 and is mainly configured to send HARQ process information, user identification information and data decoded unsuccessfully to the second node device, such that the second node device combines and decodes uplink user data retransmitted by the user.

Specifically, the first decoding unit 61 decodes received uplink user data firstly. The uplink user data may be decoded unsuccessfully due to the change in a state of a surrounding network or computing capabilities of the respective node devices, and in this case the user may retransmit the uplink user data to the second node device for decoding. Preferably, the node device may send the HARQ process information, the user identification information and the data decoded unsuccessfully to the second node device via the first sending unit 62, such that the second node device combine and decode the uplink user data retransmitted by the user.

In a possible implementation, the node device 60 may be a centralized computing center and the above second node device may be a local computing center.

In a possible implementation, the node device 60 may further include an indication unit 63. The indication unit 63 is connected to the first decoding unit 61 and is configured to indicate to switch a decoding node device for the uplink user data to the second node device, based on the network state and the computing capabilities of the respective node devices.

In a possible implementation, the first sending unit 62 may be further configured to send transmission format information to the second node device, such that the second node device combines and decodes the uplink user data retransmitted by the user.

It should be noted that, the first node device according to the embodiment of the present disclosure may also receive HARQ process information, user identification information and data decoded unsuccessfully sent from another node device such as the second node device, where the uplink user data was decoded previously, and then combines and decodes the uplink user data retransmitted by the user based on the received HARQ process information, user identification information and the data decoded unsuccessfully.

In one HARQ process according to the conventional technology, uplink user data is decoded in only one node, and the decoded uplink user data is uploaded to the back end backbone network. However, the uplink user data may be decoded unsuccessfully due to the change in the network state around the decoding node device and computing capabilities of the respective node devices. In this case, the node device according to the embodiment of the present disclosure may switch the decoding node device using the indication unit, based on the network state around the decoding node device and the computing capabilities of the respective node devices, and then send, by using the first sending unit, HARQ process information, user identification information, data decoded unsuccessfully and so on stored in a node device which is switched from to a node device which is switched to, such that the node device which is switched to can combine and decode the uplink user data retransmitted by the user. With the node device according to the embodiment of the present disclosure, the HARQ process information, the user identification information, the data decoded unsuccessfully and so on stored in the node device which is switched from may be sent to the node device which is switched to for combining and decoding, and thereby effectively improving the success rate of decoding. Moreover, by switching the decoding node device, a transmission efficiency of the uplink user data can be improved, the computing capabilities of the respective node devices are fully used and the network traffic is balanced.

### Fourth embodiment

Figure 7 shows a structural block diagram of a node device according to an embodiment of the present disclosure. As shown in Figure 7, a node device 70 may mainly include a first receiving unit 71 and a second decoding unit 72. The first receiving unit 71 is mainly configured to receive HARQ process information, user identification information and data decoded unsuccessfully sent by a first node device. And the second decoding unit 72 is connected to the first receiving unit 71 and is mainly configured to combine and decode uplink user data retransmitted by a user based on the HARQ process information, the user identification information and the data decoded unsuccessfully.

The first node device in the embodiment of the present disclosure corresponds to the above node device 60. The node device 70 may receive the HARQ process information, the user identification information and the data decoded unsuccessfully sent by the first node device, and the second decoding unit 72 may combine and decode the uplink user data retransmitted by the user based on the received HARQ process information, user identification information and the data decoded unsuccessfully.

In a possible implementation, the node device 70 may be a local computing center and the above first node device may be a centralized computing center.

In a possible implementation, the node device 70 may further include a second receiving unit 73, which is connected to the second decoding unit 72 and is configured to receive an indication of the first node device based on a network state and computing capabilities of the respective node devices, to switch a decoding node device for the uplink user data to the node device.

In a possible implementation, the first receiving unit 71 may be further configured to receive transmission format information sent by the first node device, and the second decoding unit may be configured to combine and decode the uplink user data retransmitted by the user based on the HARQ process information, the user identification information, the data decoded unsuccessfully and the transmission format information.

It should be noted that, in a possible implementation, as the node device 60, the node device 70, where data is decoded unsuccessfully, may send HARQ process information, user identification information, the data decoded unsuccessfully and so on to another node device such as the first node device, such that the first node device can combine and decode the uplink user data retransmitted by the user based on information such as the received HARQ process information, user identification information and data decoded unsuccessfully.

In one HARQ process according to the conventional technology, uplink user data is decoded in only one node, and the decoded uplink user data is uploaded to the back end backbone network. However, the uplink user data may be decoded unsuccessfully due to the change in the network state around the decoding node device and computing capabilities of the respective node devices. In this case, the node device according to the embodiment of the present disclosure may receive an indication of switching the decoding node device using the second receiving unit, based on the network state around the decoding node device and the computing capabilities of the respective node devices, receive, by using the first unit, HARQ process information, user identification information, data decoded unsuccessfully and so on sent by a node device which is switched from, such as HARQ process information, user identification information and data decoded unsuccessfully, and then combine and decode, by using the second decoding unit, the uplink user data retransmitted by the user based on the received HARQ process information, user identification information, data decoded unsuccessfully and so on. The node device according to the embodiment of the present disclosure may receive the HARQ process information, the user identification information, the data decoded unsuccessfully and so on sent by the node device which is switched from and then combine and decode the uplink user data retransmitted by the user using the HARQ process information, the user identification information, the data decoded unsuccessfully and so on, and thereby effectively improving the success rate of decoding. Moreover, by switching the decoding node device, a transmission efficiency of the uplink user data can be improved, the computing capabilities of the respective node devices are fully used and the network traffic is balanced.

### Fifth embodiment

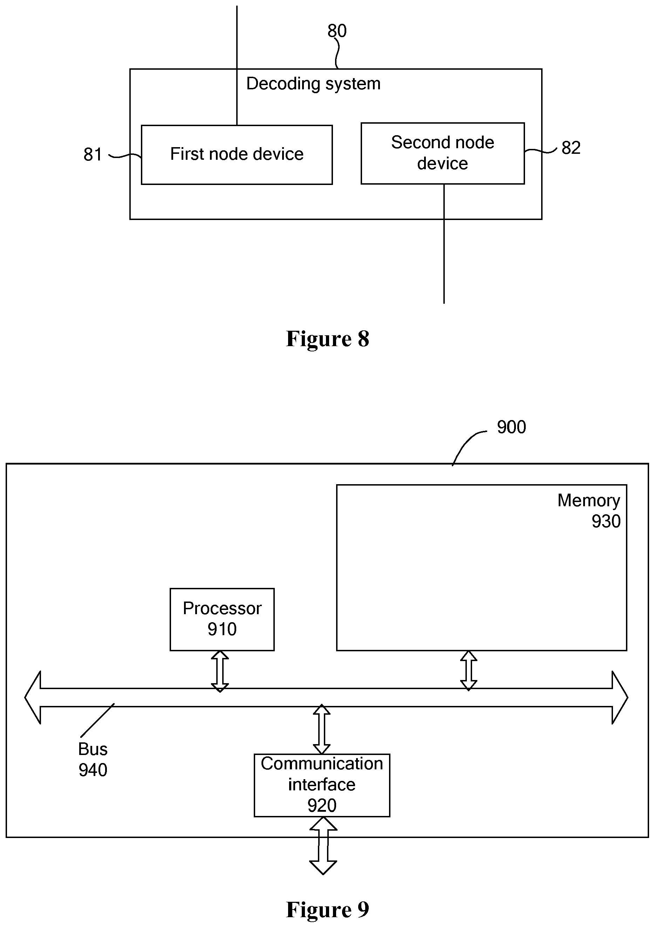

Figure 8 shows a structural block diagram of a decoding system according to an embodiment of the present disclosure. As shown in Figure 8, a decoding system 80 may mainly include a first node device 81 and a second node device 82. The first node device 81 may be the node device 60 in the third embodiment, and the second node device 82 may be the node device 70 in the fourth embodiment.

### Sixth embodiment

Figure 9 shows a structural block diagram of a node device according to an embodiment of the present disclosure. A node device 900 may be a host server, a personal computer PC, or a portable computer or terminal or the like which has a computing capability. A specific implementation of a computing node is not limited in the embodiment of the present disclosure.

The node device 900 includes a processor (processor) 910, a communication interface (Communications Interface) 920, a memory (memory array) 930 and a bus 940. The processor 910, the communication interface 920 and the memory 930 communicate with one another via the bus 940.

The communication interface 920 is configured to communicate with a network element including such as a virtual machine management center and a shared memory.

The processor 910 is configured to execute a program. The processor 910 may be a Central Processing Unit CPU, an Application Specific Integrated Circuit ASIC (Application Specific Integrated Circuit), or one or more integrated circuits configured to implement the embodiments of the present disclosure.

The memory 930 is configured to store files. The memory 930 may contain a high-speed RAM memory, or a non-volatile memory (non-volatile memory), such as at least one magnetic disk memory. Alternatively, the memory 930 may be a memory array. And the memory 930 may be divided into blocks which may be combined to form virtual volumes according to a certain rule.

In a possible implementation, the above program may be program codes including computer operational instructions. The program, when being executed, including:
decoding, by a first node device, uplink user data; and
sending, by the first node device, HARQ process information, user identification information and data decoded unsuccessfully to a second node device, such that the second node device combines and decodes uplink user data retransmitted by a user.

In a possible implementation, according to the program, the first node device may be a centralized computing center and the second node device may be a local computing center.

In a possible implementation, after the uplink user data is decoded by the first node device, the program, when being executed, including:
indicating, by the first node device based on a network state and computing capabilities of respective node devices, to switch a decoding node device for the uplink user data to the second node device.

In a possible implementation, according to the program, the first node device may be a local computing center and the second node device may be a centralized computing center.

In a possible implementation, after the uplink user data is decoded by the first node device, the program, when being executed, including:
indicating, by the second node device based on a network state and computing capabilities of respective node devices, to switch a decoding node device for the uplink user data to the second node device.

In a possible implementation, the program, when being executed, including :
sending, by the first node device, transmission format information to the second node device, such that the second node device combines and decodes the uplink user data retransmitted by the user.

It should be appreciated by those skilled in the art that, the exemplary units and algorithm steps in the embodiments described herein can be implemented as electronic hardware, or a combination of computer software and the electronic hardware. Whether the functions being implemented in a hardware form or in a software form depends on a particular application of technical solutions and a design constraint. The scope of the invention is defined in the appended claims. If the functions are implemented in a computer software form and are sold and used as an independent product, it may be considered to a certain extent that all or a part (such as a part contributing to the conventional technology) of the technical solutions of the present disclosure are embodied in a computer software product form. The computer software product is generally stored in a computer readable storage medium, including some instructions for instructing a computer device (which may be a personal computer, a server, a network device, or the like) to perform all or a part of steps of the methods according to the embodiments of the present disclosure. And the above storage medium includes mediums capable of storing program codes, such as a USB flash disk, a removable hard disk, a Read-Only Memory (ROM, Read-Only Memory), a Random Access Memory (RAM, Random Access Memory), a magnetic diskette or an optical disk.

In the above, only the embodiments of the present disclosure are described and the scope of protection of the present disclosure is not limited thereto. The scope of the invention is defined in the appended claims.

## Claims

1. A method for decoding data based on Hybrid Automatic Repeat Request HARQ, comprising:
unsuccessfully decoding (S100), by a first node device, uplink user data;
indicating (S110), by the first node device based on a network transmission capability around the first node device and computing capabilities of respective node devices, to switch the decoding node device for the uplink user data to a second node device; and
sending (S130), by the first node device, HARQ process information, user identification information and the data decoded unsuccessfully to the second node device, such that the second node device combines and decodes uplink user data retransmitted by a user after the switching with the unsuccessfully decoded data received from the first node device.

2. The method for decoding data based on HARQ according to claim 1, wherein the first node device is a centralized computing center and the second node device is a local computing center.

3. A method for decoding data based on Hybrid Automatic Repeat Request HARQ, comprising:
unsuccessfully decoding (S100), by a first node device, uplink user data;
indicating (S120), by a second node device based on a network transmission capability around the first node device and computing capabilities of respective node devices, to switch the decoding node device for the uplink user data to the second node device; and
sending (S130), by the first node device, HARQ process information, user identification information and the data decoded unsuccessfully to the second node device, such that the second node device combines and decodes uplink user data retransmitted by a user after the switching with the unsuccessfully decoded data received from the first node device.

4. The method for decoding data based on HARQ according to claim 3, wherein the first node device is a local computing center and the second node device is a centralized computing center.

5. The method for decoding data based on HARQ according to any one of claims 1 to 4, further comprising:
sending, by the first node device, transmission format information to the second node device, such that the second node device combines and decodes the uplink user data retransmitted by the user.

6. Anode device (60), comprising:
a first decoding unit (61) configured to decode uplink user data;
a first sending unit (62) connected to the first decoding unit (61) and configured to send HARQ process information, user identification information and data decoded unsuccessfully to a second node device, such that the second node device combines and decodes uplink user data retransmitted by a user with the unsuccessfully decoded data sent by the first sending unit (62); and
an indication unit (63) connected to the first decoding unit (61) and configured to indicate, based on a network transmission capability around the first node device and computing capabilities of respective node devices, to switch the decoding node device for the uplink user data to the second node device.

7. The node device according to claim 6, wherein the node device (60) is a centralized computing center and the second node device is a local computing center.

8. The node device according to any one of claims 6 to 7, wherein the first sending unit (62) is further configured to send transmission format information to the second node device, such that the second node device combines and decodes the uplink user data retransmitted by the user.

9. Anode device (70), comprising:
a first receiving unit (71) configured to receive HARQ process information, user identification information and data decoded unsuccessfully sent by a first node device;
a second decoding unit (72) connected to the first receiving unit (71) and configured to combine and decode uplink user data retransmitted by a user with the unsuccessfully decoded data sent by the first node device, based on the HARQ process information, the user identification information and the data decoded unsuccessfully; and
a second receiving unit (73) connected to the second decoding unit (72) and configured to receive an indication of the first node device based on a network transmission capability of the first node device and computing capabilities of respective node devices, to switch the decoding node device for the uplink user data to the node device (70).

10. The node device according to claim 9, wherein the node device (70) is a local computing center and the first node device is a centralized computing center.

11. The node device according to any one of claims 9 to 10, wherein the first receiving unit (71) is further configured to receive transmission format information sent by the first node device, and the second decoding unit (72) is configured to combine and decode the uplink user data retransmitted by the user based on the HARQ process information, the user identification information, the data decoded unsuccessfully and the transmission format information.

12. A decoding system (80), comprising a first node device (81) and a second node device (82), wherein the first node device (81) comprises the node device according to any one of claims 6 to 8, and the second node device (82) comprises the node device according to any one of claims 9 to 11.

## Patentansprüche

1. Verfahren zum Decodieren von Daten basierend auf einer hybriden automatischen Wiederholungsanfrage bzw. HARQ, umfassend:
erfolgloses Decodieren (S100), durch eine erste Knotenvorrichtung, von Aufwärtsstrecken-Benutzerdaten;
Angeben (S110), durch die erste Knotenvorrichtung basierend auf einer Netzwerkübertragungsfähigkeit um die erste Knotenvorrichtung herum und Rechenfähigkeiten entsprechender Knotenvorrichtungen, die decodierende Knotenvorrichtung für die Aufwärtsstrecken-Benutzerdaten zu einer zweiten Knotenvorrichtung umzuschalten; und
Senden (S130), durch die erste Knotenvorrichtung, von HARQ-Prozessinformationen, Benutzeridentifikationsinformationen und der erfolglos decodierten Daten zur zweiten Knotenvorrichtung, so dass die zweite Knotenvorrichtung Aufwärtsstrecken-Benutzerdaten, die durch einen Benutzer erneut übertragen werden, nach dem Umschalten mit den erfolglos decodierten Daten, die von der ersten Knotenvorrichtung empfangen werden, kombiniert und decodiert.

2. Verfahren zum Decodieren von Daten basierend auf HARQ nach Anspruch 1, wobei die erste Knotenvorrichtung ein zentralisiertes Rechenzentrum ist und die zweite Knotenvorrichtung ein lokales Rechenzentrum ist.

3. Verfahren zum Decodieren von Daten basierend auf einer hybriden automatischen Wiederholungsanfrage bzw. HARQ, umfassend:
erfolgloses Decodieren (S100), durch eine erste Knotenvorrichtung, von Aufwärtsstrecken-Benutzerdaten;
Angeben (S120), durch eine zweite Knotenvorrichtung basierend auf einer Netzwerkübertragungsfähigkeit um die erste Knotenvorrichtung herum und Rechenfähigkeiten entsprechender Knotenvorrichtungen, die decodierende Knotenvorrichtung für die Aufwärtsstrecken-Benutzerdaten zur zweiten Knotenvorrichtung umzuschalten; und
Senden (S130), durch die erste Knotenvorrichtung, von HARQ-Prozessinformationen, Benutzeridentifikationsinformationen und der erfolglos decodierten Daten zur zweiten Knotenvorrichtung, so dass die zweite Knotenvorrichtung Aufwärtsstrecken-Benutzerdaten, die durch einen Benutzer erneut übertragen werden, nach dem Umschalten mit den erfolglos decodierten Daten, die von der ersten Knotenvorrichtung empfangen werden, kombiniert und decodiert.

4. Verfahren zum Decodieren von Daten basierend auf HARQ nach Anspruch 3, wobei die erste Knotenvorrichtung ein lokales Rechenzentrum ist und die zweite Knotenvorrichtung ein zentralisiertes Rechenzentrum ist.

5. Verfahren zum Decodieren von Daten basierend auf HARQ nach einem der Ansprüche 1 bis 4, ferner umfassend:
Senden, durch die erste Knotenvorrichtung, von Übertragungsformatinformationen zur zweiten Knotenvorrichtung, so dass die zweite Knotenvorrichtung die Aufwärtsstrecken-Benutzerdaten, die durch den Benutzer erneut übertragen werden, kombiniert und decodiert.

6. Knotenvorrichtung (60), umfassend:
eine erste Decodierungseinheit (61), die konfiguriert ist zum Decodieren von Aufwärtsstrecken-Benutzerdaten;
eine erste Sendeeinheit (62), die mit der ersten Decodierungseinheit (61) verbunden ist und konfiguriert ist zum Senden von HARQ-Prozessinformationen, Benutzeridentifikationsinformationen und erfolglos decodierten Daten zu einer zweiten Knotenvorrichtung, so dass die zweite Knotenvorrichtung Aufwärtsstrecken-Benutzerdaten, die durch einen Benutzer erneut übertragen werden, mit den erfolglos decodierten Daten, die durch die erste Sendeeinheit (62) gesendet werden, kombiniert und decodiert; und
eine Indikationseinheit (63), die mit der ersten Decodierungseinheit (61) verbunden ist und konfiguriert ist zum Angeben, basierend auf einer Netzwerkübertragungsfähigkeit um die erste Knotenvorrichtung herum und Rechenfähigkeiten entsprechender Knotenvorrichtungen, die decodierende Knotenvorrichtung für die Aufwärtsstrecken-Benutzerdaten zur zweiten Knotenvorrichtung umzuschalten.

7. Knotenvorrichtung nach Anspruch 6, wobei die Knotenvorrichtung (60) ein zentralisiertes Rechenzentrum ist und die zweite Knotenvorrichtung ein lokales Rechenzentrum ist.

8. Knotenvorrichtung nach einem der Ansprüche 6 bis 7, wobei die erste Sendeeinheit (62) ferner konfiguriert ist zum Senden von Übertragungsformatinformationen zur zweiten Knotenvorrichtung, so dass die zweite Knotenvorrichtung die Aufwärtsstrecken-Benutzerdaten, die durch den Benutzer erneut übertragen werden, kombiniert und decodiert.

9. Knotenvorrichtung (70), umfassend:
eine erste Empfangseinheit (71), die konfiguriert ist zum Empfangen von HARQ-Prozessinformationen, Benutzeridentifikationsinformationen und erfolglos decodierten Daten, die durch eine erste Knotenvorrichtung gesendet werden;
eine zweite Decodierungseinheit (72), die mit der ersten Empfangseinheit (71) verbunden ist und konfiguriert ist zum Kombinieren und zum Decodieren von Aufwärtsstrecken-Benutzerdaten, die durch einen Benutzer erneut übertragen werden, mit den erfolglos decodierten Daten, die durch die erste Knotenvorrichtung gesendet werden, basierend auf den HARQ-Prozessinformationen, den Benutzeridentifikationsinformationen und den erfolglos decodierten Daten; und
eine zweite Empfangseinheit (73), die mit der zweiten Decodierungseinheit (72) verbunden ist und konfiguriert ist zum Empfangen einer Indikation der ersten Knotenvorrichtung basierend auf einer Netzwerkübertragungsfähigkeit der ersten Knotenvorrichtung und Rechenfähigkeiten entsprechender Knotenvorrichtungen, die decodierende Knotenvorrichtung für die Aufwärtsstrecken-Benutzerdaten zur Knotenvorrichtung (70) umzuschalten.

10. Knotenvorrichtung nach Anspruch 9, wobei die Knotenvorrichtung (70) ein lokales Rechenzentrum ist und die erste Knotenvorrichtung ein zentralisiertes Rechenzentrum ist.

11. Knotenvorrichtung nach einem der Ansprüche 9 bis 10, wobei die erste Empfangseinheit (71) ferner konfiguriert ist zum Empfangen von Übertragungsformatinformationen, die durch die erste Knotenvorrichtung gesendet werden, und die zweite Decodierungseinheit (72) konfiguriert ist zum Kombinieren und zum Decodieren der Aufwärtsstrecken-Benutzerdaten, die durch den Benutzer erneut übertragen werden, basierend auf den HARQ-Prozessinformationen, den Benutzeridentifikationsinformationen, den erfolglos decodierten Daten und den Übertragungsformatinformationen.

12. Decodierungssystem (80), das eine erste Knotenvorrichtung (81) und eine zweite Knotenvorrichtung (82) umfasst, wobei die erste Knotenvorrichtung (81) die Knotenvorrichtung gemäß einem der Ansprüche 6 bis 8 umfasst und die zweite Knotenvorrichtung (82) die Knotenvorrichtung gemäß einem der Ansprüche 9 bis 11 umfasst.

## Revendications

1. Procédé de décodage de données basé sur une demande de répétition automatique hybride, HARQ, comportant les étapes consistant à :
faire décoder sans succès (S100), par un premier dispositif de noeud, des données d'utilisateur en liaison montante ;
faire indiquer (S110), par le premier dispositif de noeud d'après une capacité de transmission en réseau autour du premier dispositif de noeud et des capacités de calcul de dispositifs de noeud respectifs, qu'il convient de commuter le dispositif de noeud de décodage pour les données d'utilisateur en liaison montante vers un deuxième dispositif de noeud ; et
faire envoyer (S 130), par le premier dispositif de noeud, des informations de processus de HARQ, des informations d'identification d'utilisateur et les données décodées sans succès au deuxième dispositif de noeud, de telle façon que le deuxième dispositif de noeud combine et décode des données d'utilisateur en liaison montante réémises par un utilisateur après la commutation avec les données décodées sans succès reçues en provenance du premier dispositif de noeud.

2. Procédé de décodage de données basé sur une HARQ selon la revendication 1, le premier dispositif de noeud étant un centre de calcul centralisé et le deuxième dispositif de noeud étant un centre de calcul local.

3. Procédé de décodage de données basé sur une demande de répétition automatique hybride, HARQ, comportant les étapes consistant à :
faire décoder sans succès (S 100), par un premier dispositif de noeud, des données d'utilisateur en liaison montante ;
faire indiquer (S120), par un deuxième dispositif de noeud d'après une capacité de transmission en réseau autour du premier dispositif de noeud et des capacités de calcul de dispositifs de noeud respectifs, qu'il convient de commuter le dispositif de noeud de décodage pour les données d'utilisateur en liaison montante vers le deuxième dispositif de noeud ; et
faire envoyer (S130), par le premier dispositif de noeud, des informations de processus de HARQ, des informations d'identification d'utilisateur et les données décodées sans succès au deuxième dispositif de noeud, de telle façon que le deuxième dispositif de noeud combine et décode des données d'utilisateur en liaison montante réémises par un utilisateur après la commutation avec les données décodées sans succès reçues en provenance du premier dispositif de noeud.

4. Procédé de décodage de données basé sur une HARQ selon la revendication 3, le premier dispositif de noeud étant un centre de calcul local et le deuxième dispositif de noeud étant un centre de calcul centralisé.

5. Procédé de décodage de données basé sur une HARQ selon l'une quelconque des revendications 1 à 4, comportant en outre les étapes consistant à :
faire envoyer, par le premier dispositif de noeud, des informations de format d'émission au deuxième dispositif de noeud, de telle façon que le deuxième dispositif de noeud combine et décode les données d'utilisateur en liaison montante réémises par l'utilisateur.

6. Dispositif (60) de noeud, comportant une première unité (61) de décodage configurée pour décoder des données d'utilisateur en liaison montante ;
une première unité (62) d'émission reliée à la première unité (61) de décodage et configurée pour envoyer des informations de processus de HARQ, des informations d'identification d'utilisateur et des données décodées sans succès à un deuxième dispositif de noeud, de telle façon que le deuxième dispositif de noeud combine et décode des données d'utilisateur en liaison montante réémises par un utilisateur avec les données décodées sans succès émises par la première unité (62) d'émission ; et
une unité (63) d'indication reliée à la première unité (61) de décodage et configurée pour indiquer, d'après une capacité de transmission en réseau autour du premier dispositif de noeud et des capacités de calcul de dispositifs de noeuds respectifs, qu'il convient de commuter le dispositif de noeud de décodage pour les données d'utilisateur en liaison montante vers le deuxième dispositif de noeud.

7. Dispositif de noeud selon la revendication 6, le dispositif (60) de noeud étant un centre de calcul centralisé et le deuxième dispositif de noeud étant un centre de calcul local.

8. Dispositif de noeud selon l'une quelconque des revendications 6 à 7, la première unité (62) d'émission étant en outre configurée pour envoyer des informations de format d'émission au deuxième dispositif de noeud, de telle façon que le deuxième dispositif de noeud combine et décode les données d'utilisateur en liaison montante réémises par l'utilisateur.

9. Dispositif (70) de noeud, comportant :
une première unité (71) de réception configurée pour recevoir des informations de processus de HARQ, des informations d'identification d'utilisateur et des données décodées sans succès émises par un premier dispositif de noeud ;
une deuxième unité (72) de décodage reliée à la première unité (71) de réception et configurée pour combiner et décoder des données d'utilisateur en liaison montante réémises par un utilisateur avec les données décodées sans succès émises par le premier dispositif de noeud, d'après les informations de processus de HARQ, les informations d'identification d'utilisateur et les données décodées sans succès ; et
une deuxième unité (73) de réception reliée à la deuxième unité (72) de décodage et configurée pour recevoir une indication du premier dispositif de noeud d'après une capacité de transmission en réseau du premier dispositif de noeud et des capacités de calcul de dispositifs de noeuds respectifs, selon laquelle il convient de commuter le dispositif de noeud de décodage pour les données d'utilisateur en liaison montante vers le dispositif (70) de noeud.

10. Dispositif de noeud selon la revendication 9, le dispositif (70) de noeud étant un centre de calcul local et le premier dispositif de noeud étant un centre de calcul centralisé.

11. Dispositif de noeud selon l'une quelconque des revendications 9 à 10, la première unité (71) de réception étant en outre configurée pour recevoir des informations de format d'émission émises par le premier dispositif de noeud, et la deuxième unité (72) de décodage est configuré pour combiner et décoder les données d'utilisateur en liaison montante réémises par l'utilisateur d'après les informations de processus de HARQ, les informations d'identification d'utilisateur, les données décodées sans succès et les informations de format d'émission.

12. Système (80) de décodage, comportant un premier dispositif (81) de noeud et un deuxième dispositif (82) de noeud, le premier dispositif (81) de noeud comportant le dispositif de noeud selon l'une quelconque des revendications 6 à 8, et le deuxième dispositif (82) de noeud comportant le dispositif de noeud selon l'une quelconque des revendications 9 à 11.
